# EUROPÄISCHE PATENTANMELDUNG

(11) **EP 1 391 370 A1**
(43) Veröffentlichungstag der Anmeldung: **25.02.2004**
(21) Anmeldenummer: 02405719.2
(22) Anmeldetag: 23.08.2002
(51) Int. Cl.: B62D 51/06, B60K 6/02

(54) **Selbstfahrende, lenkbare Arbeitsmaschine**

(71) Anmelder: Rapid Technic AG, 8953 Dietikon (CH)
(72) Erfinder: Keusch, René, 5630 Muri (CH)
(74) Vertreter: Fenner, Werner, Dipl.-Ing.

(57) **Zusammenfassung**

Eine selbstfahrende, lenkbare Arbeitsmaschine (1) für das Fortbewegen und/oder Betreiben von front- und/oder heckseitig anbaubaren Arbeitsgeräten, ist mit einer eine Fahrachse (2) der Arbeitsmaschine (1) und/oder die Arbeitsgeräte antreibenden, einen Verbrennungsmotor (5) aufweisenden Antriebsanordnung (6) ausgerüstet, wobei die Antriebsanordnung (6) eine mit dem Verbrennungsmotor (5) mechanisch gekoppelte, elektrischen Strom erzeugende Maschine (7) aufweist, die mit wenigstens einem Antriebsmotor (13, 14) eines Arbeitsgerätes und/oder (13, 14) der Fahrachse (2) der Arbeitsmaschine (1) mittelbar oder unmittelbar (direkt) elektrisch verbunden ist.

## Beschreibung

Die Erfindung betrifft eine selbstfahrende, lenkbare Arbeitsmaschine für das Fortbewegen und/oder Betreiben von front- und/oder heckseitig anbaubaren Arbeitsgeräten, mit einer eine Fahrachse der Arbeitsmaschine und/oder die Arbeitsgeräte antreibenden, einen Verbrennungsmotor aufweisenden Antriebsanordnung.
Arbeitsmaschinen dieser Art werden in der Land- und Forstwirtschaft, im kommunalen Betrieb und Unterhalt sowie im Garten- und/oder Landschaftsbau eingesetzt. Ein Verbrennungsmotor sorgt für die Fortbewegung der Arbeitsmaschine, die wenigstens eine Fahrachse aufweist, welche durch eine betätigbare Kupplung dem Verbrennungsmotor über ein Getriebe, vornehmlich ein Schaltgetriebe zuschaltbar ist.
Zu einem vielseitigen Gebrauch weist die Arbeitsmaschine eine Zapfwelle an der Front- und/oder der Heckseite auf, die dem mittel- oder unmittelbaren Antrieb eines Messerbalkens und/oder anderen Arbeitsgeräten dienen.
Es besteht die Möglichkeit, solche Arbeitsmaschinen mit einem aufladbaren, elektrischen Akkumulator zu versehen, der über einen elektrischen Anlasser den Verbrennungsmotor in Betrieb setzt.
Die Antriebsverbindung zur Fahrachse und/oder zu den Arbeitsgeräten ist mechanisch und/oder hydraulisch gestaltet, die Ansteuerung kann mechanisch, hydraulisch oder gemischt erfolgen.
Ein hydrostatischer Fahrantrieb leidet an relativ hohen Energieverlusten resp. weist einen relativ mässigen Wirkungsgrad auf und eine mechanische Kraftübertragung ist durch die Kupplung und ein Schaltgetriebe nicht in jeder Situation betriebssicher.

Aufgabe der vorliegenden Erfindung ist es, eine Arbeitsmaschine der eingangs genannten Art zu schaffen, die sich universell verwenden und durch einfache Steuerungs-Manipulationen bedienen lässt.

Erfindungsgemäss wird die Aufgabe dadurch gelöst, dass die Antriebsanordnung eine mit dem Verbrennungsmotor mechanisch gekoppelte, elektrischen Strom erzeugende Maschine aufweist, die mit wenigstens einem Antriebsmotor eines Arbeitsgerätes und/oder der Fahrachse wenigstens mittelbar elektrisch verbunden ist.
Damit können die Fahr-, Betriebs- und Bedienungseigenschaften sowie die Arbeitssicherheit im Umgang mit einer Arbeitsmaschine verbessert werden.

Als Arbeitsgeräte eignen sich für den gewerblichen und privaten Anwendungsbereich Mäh- und Häckselgeräte, Räumgeräte wie beispielsweise Schneepflüge, Schneefräsen, Kehrmaschinen und Saugeinrichtungen, anbaubare Maschinen für frost- und landwirtschaftliche Zwecke, Maschinen und Einrichtungen für Gartenanlagen und zur Gartenpflege und den Gemüseanbau sowie die Gemüseernte.

Auf die erfindungsgemässe Weise ist es möglich, durch einen zwischen Strom erzeugender Maschine und dem Antriebsmotor einen Stromspeicher bzw. aufladbaren Akkumulator zuzuschalten, dem bei laufendem Antriebsmotor von der Strom erzeugenden Maschine elektrischer Strom zugeführt werden kann und von dem zum Betrieb elektrischer Antriebsmotoren der Fahrachse oder Arbeitsgeräten elektrischer Strom bezogen werden kann.

Der Strombezug kann sowohl unmittelbar von der Strom erzeugenden Maschine als auch von der Maschine aus betrachtet mittelbar von dem Akkumulator erfolgen. Dadurch kann die Arbeitsmaschine auch abgasfrei eingesetzt werden, insbesondere in geschlossenen Räumen.

Vorzugsweise kann der Verbrennungsmotor der Arbeitsmaschine an der Abtriebswelle mit wenigstens einem Arbeitsgerät mechanisch gekoppelt werden. Damit ist die Arbeitsmaschine jeder Situation angepasst verwendbar, was bislang in der Arbeitstechnik nur mit grösserem Installationsaufwand möglich war.

Die erfindungsgemässe Arbeitsmaschine kann demnach auch als Notstromaggregat benutzt werden, indem von der elektrischen Strom erzeugenden Maschine oder den als Stromspeicher benutzten Akkumulatoren Steckdosen unterschiedlicher Spannung mit elektrischem Strom versorgt werden können.

Die Arbeitsmaschine kann auch dadurch fortbewegt werden, indem die Räder der Fahrachse einzeln bzw. unabhängig voneinander betrieben werden, durch Strom von der elektrischen Strom erzeugenden Maschine oder durch den erwähnten Stromspeicher; beispielsweise als Lenkhilfe, indem jeweils ein Antriebsmotor eines Rades mit elektrischem Strom gesteuert wird.

Es besteht mit der Arbeitsmaschine auch die Möglichkeit, dass die Räder einer Fahrachse gemeinsam mit elektrischem Strom versorgt werden, wobei die einzelnen Antriebsmotoren der Räder auch wahlweise mit unterschiedlicher Spannung angesteuert werden können.

Die Arbeitsmaschine kann zur Leistungssteigerung mit einer gleichartigen Arbeitsmaschine mechanisch und/oder elektrisch vereint und mit letzterer synchron betrieben werden, wenn ein höherer Leistungsbedarf besteht.

Es ist vorteilhaft, wenn zur Erhöhung der Leistungsfähigkeit eine Strom erzeugende Maschine und ein oder mehrere Akkumulatoren des Stromspeichers einer Arbeitsmaschine gemeinsam mit wenigstens einem Antriebsmotor verbunden sind, oder Strom erzeugende Maschinen und Akkumulatoren meherer Arbeitsmaschinen mit wenigstens einem Antriebsmotor verbunden sind.
Für den Fall, dass eine Strom erzeugende Maschine mit einem Verbraucher bzw. Antriebsmotor verbunden ist, kann zur Konstanthaltung der erforderlichen Leistung der Strom erzeugenden Maschine ein Regler zugeschaltet werden.

Für den Fall, dass eine Strom erzeugende Maschine und ein Akkumulator gemeinsam einen oder mehrere Verbraucher mit elektrischer Energie versorgen, kann eine Niveauregelung zwischen Strom erzeugender Maschine und Stromspeicher eingebaut werden, die einen Spannungsausgleich, beispielsweise auf konstantem Wert, gewährleistet.

Eine Aenderung des Leistungsbedarfs beim Lenken der Arbeitsmaschine oder bei einer Leistungsbedarfsänderung der Arbeitsgeräte kann beispielsweise über eine Spannungs-, Strom- oder Frequenzänderung bewirkt werden.

Die erfindungsgemässe Arbeitsmaschine gestattet sowohl eine elektrische wie auch eine mechanische Nutzung des Leistungsvermögens, eine Möglichkeit, die nun bei einem polyvalenten Einsatz auf eine kompakte Art zur Verfügung steht.

Zur mechanischen Nutzung der Arbeitsmaschine soll wenigstens ein Zapfwellenantrieb verfügbar sein, wie er beispielsweise bei mechanisch oder hydrostatisch betriebenen Arbeitsmaschinen vorhanden ist.

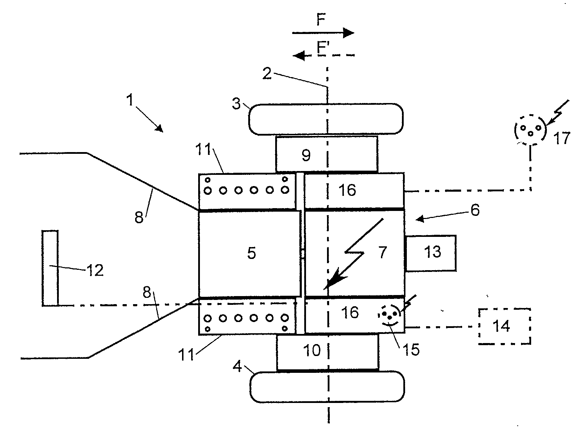

Anschliessend wird die Erfindung unter Bezugnahme auf die Zeichnung, auf die bezüglich aller in der Beschreibung nicht erwähnten Einzelheiten verwiesen wird, anhand eines Ausführungsbeispiels erläutert. In der Zeichnung zeigt die
einzige Figur in einer Draufsicht eine schematische
Darstellung einer erfindungsgemässen Arbeitsmaschine.

In der einzigen Figur ist eine selbstfahrende, lenkbare Arbeitsmaschine 1 für das Fortbewegen (vorwärts und in der Gegenrichtung) und/oder das Betreiben von front- und/oder heckseitig anbaubaren Arbeitsgeräten, auch Fahrzeuge (nicht ersichtlich) veranschaulicht, die eine Fahrachse 2 mit zwei Rädern 3, 4 aufweist, die beidseits der Arbeitsmaschine 1 angeordnet und zu deren Abstützung vorgesehen sind. Auf einem mit der Fahrachse 2 verbundenen, nicht dargestellten Fahrgestell der Arbeitsmaschine 1 ist eine einen Verbrennungsmotor 5 aufweisende Antriebsanordnung 6 befestigt, die mit den Arbeitsgeräten und/oder der Fahrachse 2 bzw. den Rädern 3, 4 in Verbindung bringbar ist, wobei der Verbrennungsmotor 5 ein von bekannten flüssigen oder gasförmigen Betriebsmitteln versorgter Motor sein kann.
Mit dem Verbrennungsmotor 5 ist eine elektrischen Strom erzeugende Maschine 7, beispielsweise ein Generator antriebsverbunden, die gemeinsam die Antriebsanordnung 6 bilden. Selbstverständlich ist dem Verbrennungsmotor 5 eine Anlassvorrichtung (nicht gezeigt) zugeordnet, die eine Inbetriebsetzung erlaubt.
Die Arbeitsmaschine 1 weist überdies zwei Lenkholmen 8 auf, an denen sie von einer Person geführt werden kann. Die Fortbewegungsrichtung der Arbeitsmaschine ist durch Pfeil F bezeichnet, Pfeil F' verweist auf die Rückwärtsbewegung.
Die Fahrachse 2 ist mit Antriebsmotoren resp. Fahrmotoren 9, 10 für jedes Rad 3, 4 ausgerüstet, die gemeinsam oder separat voneinander durch die stromerzeugende Maschine 7 (auch Generator bezeichnet) 7 direkt oder einen Akkumulator 11 antreibbar sind. In letzterem Fall erfolgt der Antrieb der Arbeitsgeräte und/oder der Fahrachse 2 bzw. der Räder 3, 4 durch einen oder mehrere Akkumulatoren 11, d.h., von der stromerzeugenden Maschine 7 aus betrachtet, von dem die Akkumulatoren 11 aufgeladen werden, mittelbar.
Die als Stromspeicher verfügbaren Akkumulatoren 11 können über eine bedienbare Steuervorrichtung 12 den Antriebsmotoren 13/14 der Arbeitsgeräte und/Oder den Fahrmotoren 9, 10 der Fahrachse 2 wahlweise zugeschaltet werden.

Es ist auch möglich, durch die Steuervorrichtung 12 den elektrischen Strom direkt vom Generator 7 zu beziehen oder von einem Verbund Generator 7 und Akkumulatoren 11 den Arbeitsgeräten und/oder und/oder der Fahrachse 2 elektrischen Strom zuzuführen.

Ferner besteht die Möglichkeit, zur Meidung unnötiger Leistungsverluste, Arbeitsgeräte, beispielsweise eine Mähvorrichtung von einer mit dem Verbrennungsmotor 5 direkt mechanisch koppelbaren Zapfwellenantrieb mit Antriebsenergie zu versorgen.

Daneben ist die Arbeitsmaschine 1 bedarfsfalls als Notstromaggregat für das Betreiben von mobilen Arbeitsgeräten, Pumpen, Schweissapparate, Handbohrmaschinen, Heckenscheren u.s.w. mit entsprechenden Steckdosen 15 ausgestattet.

Umgekehrt kann die Arbeitsmaschine für einen stationären Einsatz, beispielsweise mit einem Häcksler, Gebläse, einer Pumpe etc. oder mobil im Innenraum-einsatz mit elektrischer (Fremd-) Energie ab Netz 17 betrieben werden.
Zur Steuerung und Regelung der Antriebsanordnung ist eine entsprechende Steuereinheit 16 vorgesehen.

Bei einem grösseren Leistungsbedarf als wie er durch eine Arbeitsmaschine gedeckt werden kann, lassen sich zwei gleichartige Arbeitsmaschinen 1 beispielsweise seitlich oder hintereinander mechanisch zusammenspannen und zur synchronen Speisung der Arbeitsgeräte und/oder der Fahrachsen 2 elektrisch zusammenführen.

## Patentansprüche

1. Selbstfahrende, lenkbare Arbeitsmaschine (1) für das Fortbewegen und/oder Betreiben von front- und/oder heckseitig anbaubaren Arbeitsgeräten, mit einer wenigstens eine Fahrachse (2) der Arbeitsmaschine (1) und/oder die Arbeitsgeräte antreibenden, einen Verbrennungsmotor (5) aufweisenden Antriebsanordnung (7), **dadurch gekennzeichnet, dass** die Antriebsanordnung eine mit dem Verbrennungsmotor (5) mechanisch gekoppelte, elektrischen Strom erzeugende Maschine (7) aufweist, die mit wenigstens einem Antriebsmotor (9, 10, 13, 14) eines Arbeitsgerätes und/oder der Fahrachse (2) wenigstens mittelbar elektrisch verbunden ist.

2. Arbeitsmaschine nach Anspruch 1, **dadurch gekennzeichnet, dass** zwischen Strom erzeugender Maschine (7) und einem Antriebsmotor (9, 10, 13, 14) ein Stromspeicher (11) zuschaltbar ist.

3. Arbeitsmaschine nach Anspruch 1 oder 2, **dadurch gekennzeichnet, dass** der Verbrennungsmotor (5) mit wenigstens einem Arbeitsgerät mechanisch koppelbar ist.

4. Arbeitsmaschine nach einem der Ansprüche 1 bis 3, **dadurch gekennzeichnet, dass** diese als Notstromgaggregat ausgebildet ist.

5. Arbeitsmaschine nach einem der Ansprüche 1 bis 3, **dadurch gekennzeichnet, dass** die Räder (3, 4) einer Fahrachse (2) einzeln resp. unabhängig voneinander antreibbar mit der Strom erzeugenden Maschine (7) und/oder dem Akkumulator (11) verbindbar sind.

6. Arbeitsmaschine nach einem der Ansprüche 1 bis 3, **dadurch gekennzeichnet, dass** die Räder (3, 4) einer Fahrachse gemeinsam antreibbar mit der Strom erzeugenden Maschine (7) und/oder dem Akkumulator (11) verbindbar sind.

7. Arbeitsmaschine nach einem der Ansprüche 1 bis 6, **dadurch gekennzeichnet, dass** diese mit einer weiteren Arbeitsmaschine mechanisch und/oder elektrisch koppelbar und synchron antreib- bzw. betreibbar ist.

8. Arbeitsmaschine nach einem der Ansprüche 1 bis 7, **dadurch gekennzeichnet, dass** die elektrischen Strom erzeugende Maschine (7) und der Akkumulator (11) gemeinsam mit einem Antriebsmotor (9, 10, 13, 14) verbindbar sind.

9. Arbeitsmaschine nach einem der Ansprüche 1 bis 8, **dadurch gekennzeichnet, dass** diese sowohl elektrisch als auch mechanisch nutzbar ausgebildet ist.

10. Arbeitsmaschine nach Anspruch 9, **dadurch gekennzeichnet, dass** zur mechanischen Nutzung wenigstens ein Zapfwellenantrieb angeordnet ist.

11. Arbeitsmaschine nach einem der Ansprüche 1 bis 10, **dadurch gekennzeichnet, dass** die Arbeitsgeräte der Arbeitsmaschine (1) an ein fremdes Netz elektrischer Energie anschliessbar sind.
